# FASCICULE DE BREVET EUROPEEN

(11) **EP 3 083 134 B1**
(45) Date de publication et mention de la délivrance du brevet: **31.10.2018**
(21) Numéro de dépôt: 14827832.8
(22) Date de dépôt: 12.12.2014
(51) Int. Cl.: B23P 15/02, B22D 13/00

(54) **PROCÉDÉ DE FABRICATION DE PIÈCES DE TURBOMACHINE, ÉBAUCHE À PIÈCES SUPERPOSÉES ET MOULE OBTENUS**
VERFAHREN ZUR HERSTELLUNG VON TURBINENMOTORTEILEN UND RESULTIERENDE FORM SOWIE ROHLING MIT GESTAPELTEN TEILEN
METHOD FOR PRODUCING TURBINE ENGINE PARTS, AND RESULTING MOULD AND BLANK COMPRISING STACKED PARTS

(30) Priorité: 20.12.2013 FR 1363346
(43) Date de publication de la demande: 26.10.2016
(73) Titulaire: Safran Aircraft Engines, 75015 Paris (FR)
(72) Inventeur: HUCHIN, Patrick, Emilien, Paul, Emile, F-77550 Moissy Cramayel Cedex (FR); DESCHANDOL, Karine, F-77550 Moissy Cramayel Cedex (FR); DIGARD BROU DE CUISSART, Sébastien, F-77550 Moissy Cramayel Cedex (FR); FARGEAS, Serge, F-77550 Moissy Cramayel Cedex (FR); SOISSON, Marc, F-77550 Moissy Cramayel Cedex (FR); TEXIER, Anthony, F-77550 Moissy Cramayel Cedex (FR); PIATON, Valéry, F-77550 Moissy Cramayel Cedex (FR)
(74) Mandataire: Pichat, Thierry
(86) Numéro de dépôt international: PCT/FR2014/053327
(87) Numéro de publication internationale: WO 2015/092239

(56) Documents cités:
- EP-A1- 2 067 546
- EP-A1- 2 223 755
- WO-A1-2008/125129
- WO-A1-2014/072661
- GB-A- 2 290 998
- JP-A- 2006 336 059

## Description

La présente invention concerne un procédé de fabrication de pièces métalliques de turbomachine, et en particulier d'aubes de roue de turbine d'un turboréacteur ou d'un turbopropulseur d'avion.

La présente invention concerne aussi une ébauche obtenue à l'issue du moulage selon l'étape a) de la revendication 1 et un moule pour la mise en oeuvre du procédé de la revendication 1 seule ou en combinaison avec l'une des revendications 2 à 5.

Il est connu, pour fabriquer plusieurs telles pièces, de successivement :
a) couler un alliage métallique dans un moule pour la réalisation d'une ébauche, et
b) usiner l'ébauche pour la réalisation des pièces.

Un tel procédé est décrit dans le document GB 2 290 998 A.

Certaines ébauches cylindriques peuvent présenter des différences de microstructures entre leurs centres respectifs et la périphérie. Cela peut entraîner des différences de microstructure au sein d'une même aube.

C'est notamment le cas des pièces réalisées en alliage métallique à base de TiAl.

Dans la technique actuelle, certaines autres ébauches sont obtenues par fonderie en cire perdue dans un moule en céramique dans lequel est coulé l'alliage métallique. Ce moule est difficile à mettre au point et est à usage unique. De plus, des interactions entre le métal en fusion et la céramique peuvent générer des défauts de fonderie à la surface des ébauches, et la cire perdue peut provoquer des défauts géométriques dans les ébauches si elle est de mauvaise qualité.

Par ailleurs, usiner plusieurs pièces dans une ébauche pose des difficultés de positionnement des pièces dans l'ébauche. Il faut que la position des pièces soit compatible avec les règles métiers de fonderie, d'usinage et du métier auquel les pièces sont destinées.

La présente invention permet de remédier à au moins une partie des inconvénients précités de façon simple, efficace et économique.

La solution est présentée dans les revendications indépendantes. Les modes de réalisation préférés sont présentés dans les revendications dépendantes. La solution ici proposée consiste en ce que l'ébauche obtenue par coulée soit pleine, polyédrique et présente deux côtés opposés, chacun de forme générale trapézoïdale, les pièces étant ensuite usinées dans une telle ébauche.

Pour parvenir à la solution ici proposée, il a fallu mobiliser des savoir-faire en provenance de divers champs de compétence (fonderie, usinage). Les formes d'ébauches et de cavités de moulage qui en ont résulté ont une morphologie pertinente.

Concernant le moule utilisé, on conseille qu'il comprenne au moins une cavité de moulage polyédrique, présentant deux côtés opposés, chacun de forme générale trapézoïdale adaptée au moulage de ladite ébauche.

De préférence, il s'agira d'un moule rotatif pour le moulage simultané de plusieurs ébauches par centrifugation. Le moule sera alors lié à des moyens de mise en rotation autour d'un axe central de rotation et comprendra plusieurs cavités de moulage s'étendant radialement autour dudit axe central.

Cette technologie permet de réaliser des ébauches en TiAl, en particulier pour des aubes de turbomachine.

Dans ce domaine des turbomachines, le procédé selon l'invention auquel le moule est destiné s'applique ainsi bien au moulage d'aubes, à savoir des pièces présentent chacune un axe longitudinal et, le long de cet axe, un pied à une première extrémité, un talon à une seconde extrémité, et une pale à section incurvée qui s'étend entre elles. Selon l'invention, pour que chaque ébauche tende vers une intégration d'une partie au moins des contraintes de remplissage, de solidification, de démoulage, de découpe des ébauches, d'usinage des pièces afin que celles-ci soient conformes aux caractéristiques attendues :
- l'ébauche est adaptée à contenir entièrement au moins deux aubes identiques, situées côte-à-côte, légèrement distantes et superposées,
- et on usine ensuite ainsi lesdites aubes dans l'ébauche de manière que l'une soit tournée de 180° par rapport à l'aube adjacente, autour de l'axe longitudinal qui passe alors par deux des côtés latéraux du bloc, lesquels sont, parmi les côtés latéraux, de préférence ceux qui sont perpendiculaires aux côtés de forme générale trapézoïdale (à un angle de dépouille près, α1 ci-après).

Pour optimiser le moulage, le moule selon i'invention présente une ouverture angulaire de la base trapézoïdale comprise entre 2° et 10°, de préférence entre 3° et 8°, multiplié par N, N étant le nombre d'aubes à usiner dans l'ébauche.

Le moule, qui est par exemple un moule permanent, et dans lequel est coulé l'alliage sera de préférence métallique, ce qui permettra de limiter la contamination du matériau des ébauches par celui du moule.

Concernant les ébauches, et dans le but d'une optimisation d'usinage des pièces moulées, la solution selon l'invention consiste en ce que
- la base sensiblement trapézoïdale de l'ébauche est située sur deux côtés opposés de plus grandes surfaces de l'ébauche, et,
- l'ébauche considérée présente une ouverture angulaire de la base trapézoïdale comprise entre 2° et 10°, de préférence entre 3° et 8°, multiplié par N, N étant le nombre d'aubes à usiner dans l'ébauche.

On recommande aussi :
- que l'ébauche considérée présente une forme générale de prisme à base trapézoïdale, et/ou,
- que l'ébauche considérée présente une forme générale de prisme oblique, et/ou,
- que le prisme ait un angle d'ouverture de préférence compris entre 0° et 30°, et de préférence entre 0° et 20°.

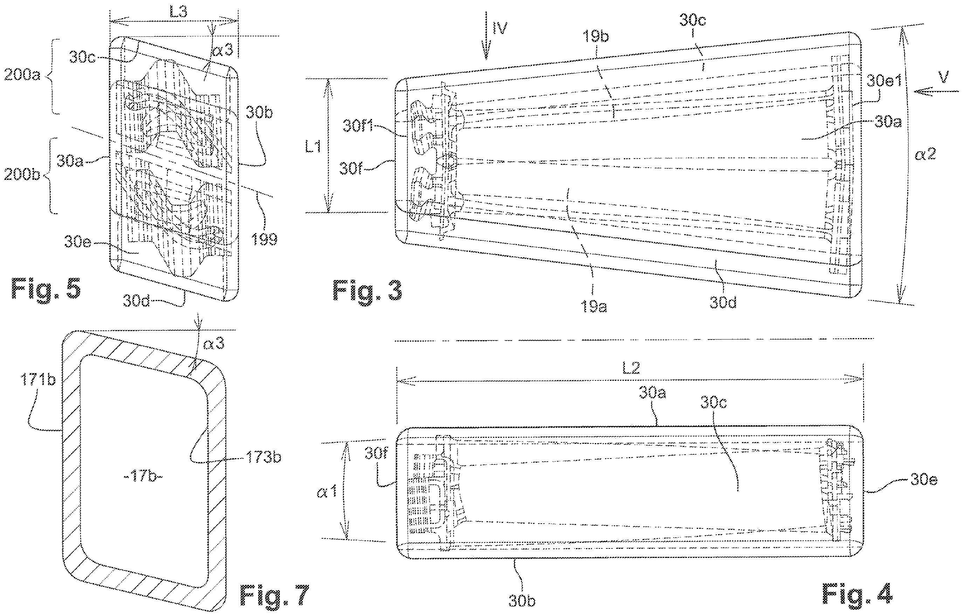

D'autres avantages et caractéristiques de l'invention apparaîtront à la lecture de la description suivante faite à titre d'exemple non limitatif et en référence aux dessins annexés où les figures 3 à 5 sont précises dimensionnellement et correspondent à une réalité industrielle, à l'image de plans côtés, et dans lesquels :
- la figure 1 schématise un dispositif de fabrication d'ébauches ou barreaux, par moulage,
- la figure 2 est une vue schématique en perspective d'une première réalisation possible d'une ébauche moulée, obtenue par exemple par le dispositif de moulage de la figure 1,
- les figures 3,4,5 sont des vues d'une variante de l'ébauche moulée de la figure 2, respectivement suivant un premier côté, de dessus (flèche iV), et suivant un second côté (flèche V),
- la figure 6 schématise une partie de moule, avec sa cavité de moulage de l'ébauche de la figure 2, et
- la figure 7 montre la coupe VII-VII de la figure 6, dans le cas d'une ébauche selon les figures 3 à 5.

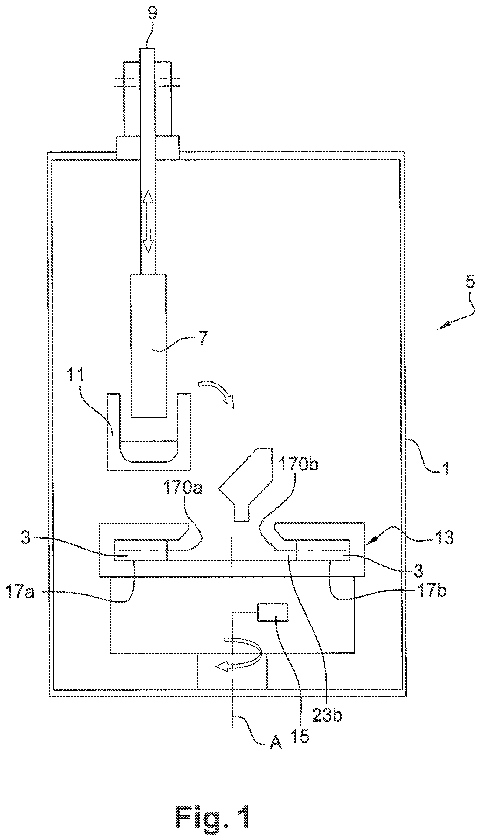

Ainsi, on voit figure 1 un dispositif 1 de fabrication d'ébauches ou barreaux 3, par des opérations successives de fonte, coulée et moulage.

Le dispositif 1 comprend une enceinte 5 fermée et étanche dans laquelle est appliqué un vide partiel. Un lingot 7 en alliage métallique, à base de TiAl par exemple, est fixé à une extrémité d'une électrode 9 qui est reliée à une borne d'une source de courant dont l'autre borne est reliée à un creuset 11 logé dans l'enceinte 5. Lorsque le lingot 7 se rapproche du creuset 11, des arcs électriques se forment entre le creuset et le lingot ce qui provoque la fusion du lingot qui tombe alors au fond du creuset (VSM : Vacuum Skull Melting). Lorsque le lingot est complètement fondu dans le creuset l'alliage métallique est versé dans un moule 13, de préférence métallique et permanent.

Ce moule 13 permet de couler l'alliage par centrifugation. Pour cela, le moule est mis en rotation autour d'un axe A par l'intermédiaire d'un moteur 15.

Le moule comprend plusieurs logements ou cavités, telles ici 17a, 17b, qui s'étendent radialement autour de l'axe A. L'alliage à couler est apporté vers le centre du moule et la rotation du moule le répartit vers les cavités. On conseille que ces cavités soient régulièrement espacés autour de l'axe A.

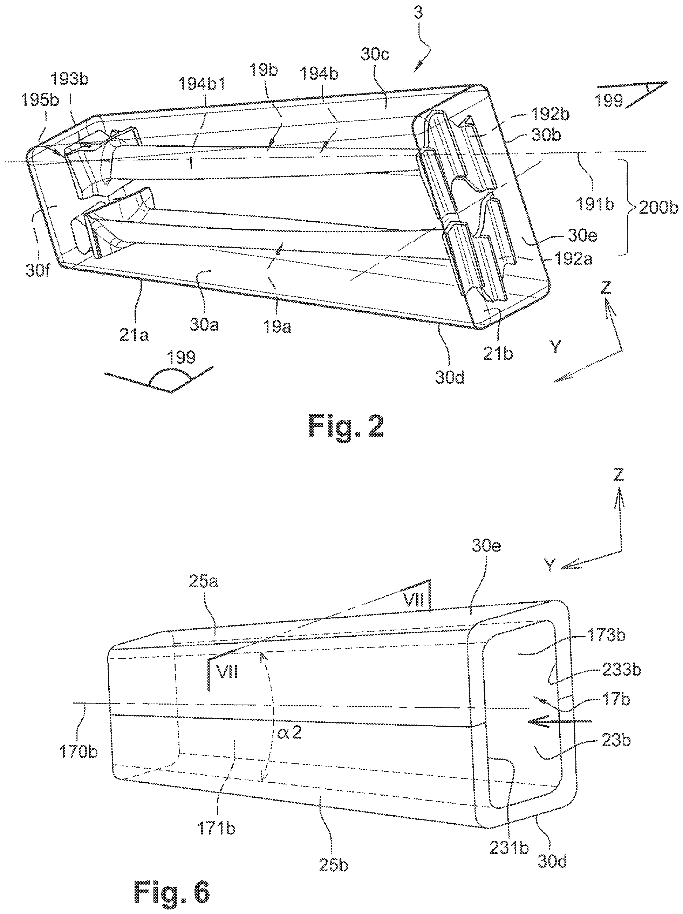

De préférence, l'axe A sera vertical et celui (tels ici 170a, 170b) de chaque cavité sera horizontal. Sur la figure 1, les cavités, telles 17a, 17b, de moulage n'ont toutefois pas été représentées avec leur(s) forme(s) optimisée(s), notamment pour convenir au moulage d'une ébauche 3 conforme à celle des figures 2 à 5.

Les forces centrifuges générées par la rotation du moule forcent l'alliage en fusion à pénétrer dans ces cavités et à les remplir.

Après refroidissement, le moule 13 est démonté et les pièces moulées sont extraites.

On aura compris que la formes des cavités 17a,17b... correspondra à celle des pièces. Ce qui suit concernant les pièces ou ébauches s'applique donc aussi aux cavités du moule.

Sur la figure 2, qui montre la forme générale d'une ébauche moulée conforme à la solution ici proposée, et qui peut être l'une de celles référencées 3 ci-avant, on note d'emblée que ce barreau ou ébauche 3 est totalement plein, polyédrique et présente deux côtés opposés 30a,30b, chacun de forme générale trapézoïdale.

C'est dans une telle ébauche, considérée dans son état solide, que les pièces telles 19a,19b, ici deux aubes de turbomachine, seront usinées, le moment venu.

Selon l'invention, l'ébauche 3 présente une forme générale de prisme à base trapézoïdale. On considère qu'est un prisme un polyèdre ayant deux bases égales et parallèles, ici 30a et 30b, et dont les autres faces, dites latérales, sont des parallélogrammes.

On inclura dans cette définition l'ébauche 3, même si :
- comme probable (compte tenu de ce qu'elle sera a priori obtenu par coulée dans un moule), elle présente des angles arrondis, tels 21a, 21b,
- et/ou si elle présente des côtés (tout ou partie des bases ou côtés latéraux) non totalement plans, et en particulier localement convexes, pour y augmenter la quantité de matière autour d'au moins une des pièces à usiner,
- et/ou si, comme probable, deux côtés opposés, tels les côtés de base 30a et 30b, sont non-parallèles de moins de 5° d'angle (notamment du fait d'un angle de dépouille, tel α1 ci-après) et/ou non-égaux en surface de moins de 5%.

L'ébauche 3 est un hexaèdre. Le prisme est droit. Il pourra être oblique ; voir figure 5.

On remarquera sur toutes les figures 2-5, mais plus nettement sur la figure 2, que l'/chaque ébauche 3 a été définie, à partir des pièces à y usiner et des règles tant de moulage que d'usinage que de qualité des pièces finies pour que les pièces puissent être usinées côte-à-côte, à faible distance l'une de l'autre, en superposition. Il n'y aura alors pas d'imbrication des pièces.

A ce sujet, avant d'usiner les pièces, telles 19a, 19b, côte-à-côte, on pourra de préférence découper l'ébauche suivant un trait de coupe très simple, tel suivant un plan 199 (figure 2) :
- passant entre deux volumes, tels 200a, 200b, de l'ébauche chacun adapté à contenir entièrement au moins une desdites pièces,
- et qui coupera les deux côtés opposés de plus grandes surfaces 30a, 30b de l'ébauche et deux autres côtés latéraux opposés, ici 30e, 30f.

Sur les figures 3-5, la configuration du prisme a été optimisée. Toujours de forme générale trapézoïdale, il est oblique.

Pour obtenir un remplissage du moule et une solidification adéquats, un positionnement, dans l'ébauche, des pièces telles 19a, 19b sans imbrication, autorisant une première découpe simple et un volume hors tout de cette ébauche défini afin de minimiser les temps d'usinage, la solution selon l'invention consiste, comme on le voit aussi sur les figures 2-5 en ce que lesdites pièces sont usinées dans l'ébauche de manière que l'une 19a soit tournée de 180° par rapport à l'aube adjacente, telle 19b, autour de son axe longitudinal, tel 191b pour l'aube 19b, qui passe alors par deux des côtés latéraux 30e, 30f de l'ébauche, lesquels sont, parmi les côtés latéraux, ceux qui sont perpendiculaires aux côtés de base 30a et 30b, de préférence à l'angle α1 de dépouille près, lequel sera compris entre 0° et 5°, et de préférence entre 0° et 3°(voir figure 4).

On remarquera que les pièces telles 19a,19b sont légèrement distantes l'une de l'autre et superposées. L'ébauche 3 est donc plus haute (direction verticale Z ; figures 2,6) qu'épaisse ou large (direction Y perpendiculaire à Z)

Plus nettement sur la figure 2, on remarque que si les pièces à usiner sont des aubes, chacune (par exemple celle référencée 19b) présentera donc un axe longitudinal 191b et, le long de cet axe, un pied 193b adjacent à une plate-forme intérieure 195b, à une première extrémité, un talon (ou plate-forme extérieure) 192b à une seconde extrémité, et une pale 194b à section incurvée qui s'étend entre les plateformes. L'axe longitudinal 191b pourra passer par le centre géométrique du pied et du talon.

En particulier, les pales (telle celle 194b ; figure 2) des aubes seront par ailleurs chacune avantageusement prévues pour être usinées avec leur face convexe (telle 194b1 sur la figure 2) orientée en direction de la face 30c, la face opposée concave étant donc alors orientée en direction de la face 30d, et inversement pour la pale 19a la plus proche du côté 30d.

Figure 2, on remarque que, pour être usinées « tournées de 180° » comme mentionné, deux aubes adjacentes seront donc de préférence dos à dos dans l'ébauche moulée. Le côté concave des pales se fera alors face.

On remarque également que les talons (ou plate-forme extérieure) 192a,192b sont prévus pour être usinés face au, et à proximité immédiate du, côté 30e, tandis que les plateformes intérieures, telle celle 193b, seront immédiatement proches du côté opposé 30f.

Tant dans le cas de la figure 2 que celui des figures 3-5 :
- les deux côtés latéraux 30e, 30f, (de préférence strictement parallèles entre elles), sont donc perpendiculaires aux deux côtés opposés de base (globalement trapézoïdaux) de plus grandes surfaces 30a, 30b (à l'angle α1 de dépouille près),
- et deux bords opposés 30e1, 30f1 de chacun de ces deux côtés latéraux définissent, par paire, respectivement les deux grandes bases et les deux petites bases des côtés trapézoïdaux opposés 30a, 30b, respectivement.

Par ailleurs, il est recommandé que, pour une maitrise optimisée du volume hors tout, eu égard aux aubes en cause, on prévoit une ouverture angulaire α2 de la base trapézoïdale (angle entre les côtés, 30c, 30d) comprise entre 2° et 10° (et de préférence entre 3° et 8°) multiplié par N, N étant le nombre d'aubes à usiner dans l'ébauche.

Toujours pour un usinage optimisé, en termes de qualité de pièces finies et de consommation de matière, de plusieurs aubes identiques dans une même ébauche 3, cette dernière présentera de préférence une forme générale de prisme oblique, avec un angle d'ouverture α3 compris entre 0° et 30°, et de préférence entre 0° et 20°, comme dans le cas des figures 3 et 5. Cet angle α3 est ainsi, s'il est non nul, l'angle suivant lequel le prisme est passé de droit à oblique.

Comme montré en particulier figures 2 et 5, une conformation ainsi conçue de l'/chaque ébauche permettra que, par rapport aux faces qui les entourent, on y usine toutes les pièces (identiques) à une profondeur minimum, eu égard aux contraintes imposées par la forme de ces pièces et leurs caractéristiques structurelles.

Si, comme préféré, les ébauches sont coulées par centrifugation dans un moule rotatif, tel le moule 13, on utilisera de préférence un moule à coquilles.

Concernant maintenant les cavités de moulage, notamment s'il s'agit de l'une de celle de la figure 1, comme par exemple celle référencée 17b, il est recommandé ce qui suit, comme illustré figure 6 où, par souci de simplification, l'ébauche à mouler est supposée celle de la figure 2 :
- la/chaque cavité de moulage, telle 17b, est polyédrique et présente deux côtés opposés 171b,173b, chacun de forme générale trapézoïdale adaptée au moulage de ladite ébauche pleine,
- dans le cas où plusieurs aubes sont à usiner (de préférence dos à dos) dans l'ébauche moulée, de manière donc que l'une soit tournée de 180° par rapport à l'aube adjacente, autour de l'axe longitudinal, la base trapézoïdale (face 171b ou 173b) présente selon l'invention une ouverture angulaire α2 comprise entre 2° et 10°, de préférence entre 3° et 8°, multiplié par N, N étant, comme déjà indiqué, le nombre d'aubes à usiner dans l'ébauche, à savoir côte-à-côte le long des faces 30e,30f, lesquelles seront donc d'autant plus longue (voir longueur L1 figure 3 des faces 30c,30d, pour le côté 30f) qu'il y aura de pièces sensiblement alignées le long,
- l'ouverture d'accès à la (chaque) cavité, ici référencée 23b, est située sur le côté latéral dressé de cette cavité dont des côtés opposés dressés 231b, 233b sont les grandes bases des côtés opposés 171b, 173b de forme générale trapézoïdale,
- l'enveloppe de moulage comprend (au moins) deux coquilles 25a, 25b, chacune incorporant une partie de la cavité de moulage concernée, ici 17b.

C'est dans ce cas à l'endroit, ou en face, de l'ouverture 23b que sera moulée la face 30e de l'ébauche, et c'est par l'ouverture 23b que l'alliage métallique entrera dans la cavité (voir flèche figure 6), voire que l'ébauche moulée, durcie, 3 pourrait en sortir ; toutefois, avec des coquilles 25a, 25b séparables on pourra permettre un démoulage plus simple de l'ébauche.

A l'opposé de l'ouverture 23b, le fond de la cavité (et donc du moule) est plein.

Figure 7, on voit que, pour obtenir l'ébauche des figures 3-5, la cavité de moulage concernée, telle 17b, présentera alors une forme générale de prisme à base trapézoïdale (171b, 173b), avec un angle α3 d'ouverture du prisme compris entre 0° et 30°, et de préférence entre 0° et 20°.

Dans un exemple particulier de réalisation, chaque ébauche pourra avoir une longueur L2, entre les côtés 30e, 30f comprise entre 160 et 240cm, et une longueur L3 entre les côtés 30a, 30b comprise entre 40 et 70cm.

Pour deux aubes comme illustré figures 3-5, la longueur L1, pourra être comprise entre 100 et 140cm.

On aura compris de ce qui précède que plus de deux pièces pourraient être usiner dans une seule ébauche 3, en particulier plus de deux aubes identiques 19a,19b à usiner sensiblement au même niveau de profondeur, uniquement en allongeant la longueur L1.

Toutes les pièces devraient avoir le même volume et la même masse.

## Revendications

1. Procédé de fabrication de plusieurs pièces (19a, 19b) métalliques de turbomachine, comprenant des étapes consistant à :
a) couler un alliage métallique dans un moule (13) pour la réalisation d'une ébauche (3), et
b) usiner l'ébauche pour la réalisation des pièces,
**caractérisé en ce que** :
- l'ébauche obtenue par coulée est pleine, polyédrique et présente deux côtés opposés (30a, 30b), chacun de forme générale trapézoïdale, et les pièces sont usinées dans l'ébauche,
- les pièces (19a, 19b) sont des aubes présentant chacune un axe longitudinal (191b) et, le long de cet axe, un pied (193b) à une première extrémité, un talon (192b) à une seconde extrémité, et une pale (194b) à section incurvée qui s'étend entre elles,
- l'ébauche (3) est adaptée à contenir entièrement au moins deux telles aubes identiques, distantes, situées côte-à-côte et superposées,
- on usine lesdites aubes dans l'ébauche de manière que l'une soit tournée de 180° par rapport à l'aube adjacente, autour de l'axe longitudinal (191b) qui passe alors par deux des côtés latéraux (30e, 30f) de l'ébauche, et
- on moule l'ébauche :
-- avec sa base sensiblement trapézoïdale située sur deux côtés opposés (30a,30b) de plus grandes surfaces de l'ébauche, et,
-- avec une ouverture angulaire (α2) de la base trapézoïdale comprise entre 2° et 10°, multiplié par N, N étant le nombre d'aubes à usiner côte-à-côte dans l'ébauche.

2. Procédé selon la revendication 1, **caractérisé en ce que**, lors de l'étape a), on moule l'ébauche (3) de façon qu'elle présente une forme générale de prisme à base trapézoïdale.

3. Procédé selon la revendication 1 ou 2, **caractérisé en ce que**, lors de l'étape a), on moule l'ébauche (3) de façon qu'elle présente une forme générale de prisme oblique.

4. Procédé selon l'une des revendications 2 ou 3, **caractérisé en ce que** le prisme présente un angle d'ouverture (α3) compris entre 0° et 30°.

5. Procédé selon l'une des revendications précédentes, **caractérisé en ce qu'**avant d'usiner lesdites pièces, on découpe l'ébauche suivant sensiblement un plan (199) de symétrie :
- qui passe entre deux volumes (200a, 200b) de l'ébauche chacun adapté à contenir entièrement au moins une desdites pièces,
- et qui coupe les deux côtés opposés (30a, 30b) de plus grandes surfaces de l'ébauche et deux autres côtés latéraux opposés (30e, 30f).

6. Ebauche obtenue à l'issue du moulage selon l'étape a) de la revendication 1, **caractérisé en ce que** :
- sa base sensiblement trapézoïdale est située sur deux côtés opposés de plus grandes surfaces de l'ébauche, et,
- elle présente une ouverture angulaire (α2) de la base trapézoïdale comprise entre 2° et 10°, multiplié par N, N étant le nombre d'aubes à usiner dans l'ébauche.

7. Ebauche selon la revendication 6, **caractérisé en ce qu'**elle présente une forme générale de prisme à base trapézoïdale, avec un angle d'ouverture (α3) du prisme compris entre 0° et 30°.

8. Moule pour la mise en oeuvre du procédé de la revendication 1 seule ou en combinaison avec l'une des revendications 2 à 5, **caractérisé en ce qu'**il présente une ouverture angulaire (α2) de la base trapézoïdale comprise entre 2° et 10°, multiplié par N, N étant le nombre d'aubes à usiner dans l'ébauche.

9. Moule selon la revendication 8, **caractérisé en ce qu'**il s'agit d'un moule rotatif, pour un moulage simultané de plusieurs dites ébauches par centrifugation, le moule étant lié à des moyens (15) de mise en rotation autour d'un axe central de rotation (A) et comprenant plusieurs cavités de moulage (17a, 17b) qui s'étendent radialement autour dudit axe central (A).

10. Procédé selon l'une des revendication 1 à 5, **caractérisé en ce que** l'ouverture angulaire (α2) de la base trapézoïdale est comprise entre 3° et 8°, multiplié par N, N étant le nombre d'aubes à usiner côte-à-côte dans l'ébauche.

11. Procédé selon la revendication 4, **caractérisé en ce que** l'angle d'ouverture (α3) est compris entre 0° et 20°.

12. Ebauche selon la revendication 6 ou 7, **caractérisée en ce que** l'ouverture angulaire (α2) de la base trapézoïdale est comprise entre 3° et 8°, multiplié par N, N étant le nombre d'aubes à usiner dans l'ébauche.

13. Ebauche selon la revendication 7, **caractérisée en ce que** ce l'angle d'ouverture (α3) est compris entre 0° et 20°.

14. Moule selon la revendication 8 ou 9, **caractérisé en ce que** l'ouverture angulaire (α2) de la base trapézoïdale est comprise entre 3° et 8°, multiplié par N, N étant le nombre d'aubes à usiner côte-à-côte dans l'ébauche.

## Patentansprüche

1. Verfahren zur Herstellung mehrerer metallischer Teile (19a, 19b) einer Turbomaschine, welches aus folgenden Schritten besteht:
a) dem Gießen einer Metalllegierung in eine Form (13) zur Herstellung eines Rohlings (3), und
b) dem Bearbeiten des Rohlings zwecks Herstellung der Teile,
**dadurch gekennzeichnet, dass**:
- der durch Gießen erzielte Rohling vollmassig und polyedrisch ist und zwei gegenüberliegende, jeweils generell trapezförmige Seiten (30a, 30b) aufweist, und die Werkstücke aus dem Rohling herausgearbeitet werden,
- die Teile (19a, 19b) Schaufeln sind, die jeweils eine Längsachse (191b) und entlang dieser Achse einen Fuß (193b) an einem ersten Ende, einen Absatz (192b) an einem zweiten Ende, und dazwischen ein Schaufelblatt (194b) mit gekrümmtem Querschnitt aufweisen,
- der Rohling (3) so gestaltet ist, dass aus ihm mindestens zwei identische Schaufeln dieser Art, zueinander beanstandet, übereinander und nebeneinander liegend herausgearbeitet werden können,
- man besagte Schaufeln so aus dem Rohling herausarbeitet, dass eine Schaufel um die durch beide Seitenflächen (30e, 30f) des Rohlings verlaufende Längsachse (191b) herum um 180° zur daneben befindlichen Schaufel gedreht ist, und
- man den Rohling so gießt,:
-- dass sich seine im Wesentlichen trapezförmigen Grundfläche an den beiden gegenüberliegenden Seiten (30a, 30b) mit den größeren Flächen des Rohlings befindet, und
-- der Öffnungswinkel (α2) der trapezförmigen Grundfläche 2° bis 10°, multipliziert mal N beträgt, wobei N die Anzahl der nebeneinander aus Rohling herauszuarbeitenden Schaufeln ist.

2. Verfahren nach Anspruch 1, **dadurch gekennzeichnet, dass** man den Rohling (3) in Schritt a) so gießt, dass er generell die Form eines Prismas mit trapezförmiger Grundfläche aufweist.

3. Verfahren nach Anspruch 1 oder 2, **dadurch gekennzeichnet, dass** man den Rohling (3) in Schritt a) so gießt, dass er generell die Form eines schiefen Prismas aufweist.

4. Verfahren nach einem der Ansprüche 2 oder 3, **dadurch gekennzeichnet, dass** das Prisma einen Öffnungswinkel (α3) von 0° bis 30° aufweist.

5. Verfahren nach einem der vorhergehenden Ansprüche, **dadurch gekennzeichnet, dass** man den Rohling vor dem Herausarbeiten besagter Teile im Wesentlichen in einer Symmetrieebene (199) zerschneidet:
- die durch zwei Volumina (200a, 200b) des Rohlings verläuft, wobei jedes Volumen mindestens eines der besagten Teile in vollem Umfang enthalten kann,
- welche die beiden gegenüberliegenden Seiten des Rohlings (30a, 30b) mit den größeren Flächen und zwei andere gegenüberliegende Seitenflächen (30e, 30f) schneidet.

6. Rohling, der im Gießvorgang von Schritt a) aus Anspruch 1 erzielt wurde, **dadurch gekennzeichnet, dass**:
- sich seine im Wesentlichen trapezförmige Grundfläche an zwei gegenüberliegenden Seiten des Rohlings mit größerer Fläche befindet, und
- er einen Öffnungswinkel (α2) der trapezförmigen Grundfläche von 2° bis 10°, multipliziert mal N beträgt, wobei N die Anzahl der aus dem Rohling herauszuarbeitenden Schaufeln ist.

7. Rohling nach Anspruch 6, **dadurch gekennzeichnet, dass** er generell die Form eines Prismas mit trapezförmiger Grundfläche aufweist, wobei das Prisma einen Öffnungswinkel (α2) von 0° bis 30° hat.

8. Form zur Anwendung des Verfahrens nach Anspruch 1 alleine oder in Kombination mit einem der Ansprüche 2 bis 5, **dadurch gekennzeichnet, dass** sie einen Öffnungswinkel (α2) der trapezförmigen Grundfläche von 2° bis 10° multipliziert mal N beträgt, wobei N die Anzahl der aus dem Rohling herauszuarbeitenden Schaufeln ist.

9. Form nach Anspruch 8, **dadurch gekennzeichnet, dass** es sich um eine rotierende Form für das gleichzeitige Formen mehrerer sogenannter Rohlinge im Schleudergussverfahren handelt, wobei die Form mit Mitteln (15) zur Drehung um eine mittige Drehachse (A) verbunden ist und mehrere Formhohlräume (17a, 17b) aufweist, die sich radial um besagte zentrale Achse (A) herum erstrecken.

10. Verfahren nach einem der Ansprüche 1 bis 5, **dadurch gekennzeichnet, dass** der Öffnungswinkel (α2) der trapezförmigen Grundfläche 3° bis 8° multipliziert mal N beträgt, wobei N die Anzahl der nebeneinander aus dem Rohling heraus zu arbeitenden Schaufeln ist.

11. Verfahren nach Anspruch 4, **dadurch gekennzeichnet, dass** der Öffnungswinkel (α2) 0° bis 20° beträgt.

12. Rohling nach Anspruch 6 oder 7, **dadurch gekennzeichnet, dass** die Winkelöffnung (α2) der trapezförmigen Grundfläche 3° bis 8° multipliziert mal N beträgt, wobei N die Anzahl der aus dem Rohling heraus zu arbeitenden Schaufeln ist.

13. Rohling nach Anspruch 7, **dadurch gekennzeichnet, dass** dieser Öffnungswinkel (α3) 0° bis 20° beträgt.

14. Form nach Anspruch 8 oder 9, **dadurch gekennzeichnet, dass** diese Winkelöffnung (α2) der trapezförmigen Grundfläche 3° bis 8° multipliziert mal N beträgt, wobei N die Anzahl der nebeneinander aus Rohling zu bearbeitenden Schaufeln ist.

## Claims

1. A method for producing multiple metal turbine engine parts (19a, 19b) for a turbine engine, comprising steps consisting in:
a) casting a metal alloy in a mould (13) in order to produce a blank (3); and
b) machining the blank in order to produce the parts,
**characterized in that**:
- the blank obtained by casting is a solid polyhedron and has two generally opposing sides (30a, 30b), each having a generally trapezoidal shape, and the parts are machined in the blank.
- said parts (19a, 19b) are blades each having a longitudinal axis (191b) and, along such axis, a root (193b) at a first end, a heel (192b) at a second end, and a curved section vane (194b) which extends there between,
- the blank (3) is adapted to totally contain at least two such identical and distant parts, placed side by side and one on top of the other,
- said blades are machined in the blank so that one is rotated by 180° relative to the adjacent blade, about the longitudinal axis (191b) which then passes through two of the lateral sides (30e,30f) of the blank, and
- moulding the blank:
-- with its base substantially trapezoidal located on two opposite sides (30a, 30b) of larger surface of the blank, and
-- with an opening angle (α2) of the trapezoidal base comprised between 2 and 10°, multiplied by N, N being the number of blades to be machined side by side in the blank.

2. A method according to claim 1, **characterized in that**, during the step a), the blank (3) is moulded so that it has a general trapezoid-based prism shape.

3. A method according to one of claims 1 or 2, **characterized in that**, during the step a), the blank (3) is moulded so that it has a general oblique prism shape.

4. A method according to one of claims 2 or 3, **characterized in that** the prism has an opening angle (α3) ranging from 0° to 30°.

5. A method according to one of the preceding claims, **characterized in that**, prior to machining said parts, the blank is cut substantially along a plane of symmetry (199):
- which passes between two volumes (200a, 200b) of the blank, each being adapted to totally contain at least one of said parts,
- and which cuts the two opposing sides (30a, 30b) of the larger surfaces of the blank and two other opposing lateral sides (30e, 30f).

6. A blank obtained upon completion of the moulding according to the step a) according to claim 1, **characterized in that**:
- the substantially trapezoidal base thereof is located on two opposing sides of the larger surfaces of the blank, and
- it has an angular opening (α2) of the trapezoidal base ranging from 2° to 10°, multiplied by N, with N being the number of blades to be machined in the blank.

7. A blank according to claim 6, **characterized in that** it has a general trapezoidal-base prism shape, with an opening angle (α3) of the prism ranging 0° and 30°.

8. A mould for implementing the method according to claim 1 alone or combined with one of claims 2 to 5, **characterized in that** it has an angular opening (α2) of the trapezoidal base ranging from 2° to 10°, multiplied by N, N being the number of blades to be machined in the blank.

9. A mould according to claim 8, **characterized in that** the mould is rotating, for the simultaneous moulding of several blanks by centrifugation, with the mould being connected to means (15) providing rotation about a central axis of rotation (A) and comprising several mould cavities (17a, 17b) radially extending about said central axis (A).

10. A method according to any one of claims 1 to 5, **characterized in that** the opening angle (α2) of the trapezoidal base is comprised between 3 and 8°, multiplied by N, N being the number of blades to be machined one side by side in the blank.

11. A method according to claim 4, **characterized in that** the opening angle (α3) is comprised between 0 and 20°.

12. A blank according to claim 6 or 7, **characterized in that** the opening angle (α2) of the trapezoidal base is comprised between 3 and 8°, multiplied by N, N being the number of blades to be manufactured in the blank.

13. A blank according to claim 7, **characterized in that** the opening angle (α3) is comprised between 0 and 20°.

14. A mould according to claim 8 or 9, **characterized in that** the opening angle (α2) of the trapezoidal base is comprised between 3 to 8°, multiplied by N, N being the number of blades to be manufactured side by side in the blank.
